# EUROPEAN PATENT APPLICATION

(11) **EP 0 806 776 A1**
(43) Date of publication of application: **12.11.1997**
(21) Application number: 97201278.5
(22) Date of filing: 28.04.1997
(51) Int. Cl.: G21C 19/10

(54) **A method for fuel handling**

(30) Priority: 10.05.1996 SE 9601806
(71) Applicant: ABB ATOM AB, 721 63 Västeras (SE)
(72) Inventor: Bäversten, Bengt, 723 53 Västeras (SE); Nyström, Karl-Erik, 722 45 Västeras (SE); Rosengren, Anders, 724 65, Västeras (SE); Suvanto, Antti, 723 49 Västeras (SE)
(74) Representative: Dahlstrand, Björn

(57) **Abstract**

The present invention relates to a method for fuel handling comprising lifting of fuel assemblies (4) out of/into a nuclear reactor. The nuclear reactor comprises a reactor vessel (1) which in turn comprises a reactor core (5) with a plurality of fuel assemblies (4) and control rods (11) and a fuel pool (3) arranged adjacent the reactor vessel (1). According to one aspect of the invention, the whole of or parts of the reactor core (5) is or are simultaneously lifted out of and into the reactor vessel (1), respectively. The removed fuel assemblies (4) or the control rods (11) or the fuel assemblies (4) and the control rods (11) are arranged temporarily in the fuel pool (3).

## Description

### TECHNICAL FIELD

The present invention relates to a method for handling fuel assemblies in a light-water nuclear power reactor comprising a reactor vessel with a reactor core. More particularly, the invention relates to such handling of fuel assemblies which occurs when fuel assemblies are to be replaced or transferred to a new position when the reactor vessel or parts connected thereto are to be serviced and therefore have to be emptied of fuel assemblies.

### BACKGROUND ART

A light-water nuclear power plant comprises a reactor vessel which encloses a reactor core. The reactor core comprises a large number of fuel assemblies. More particularly, the core comprises normally between 400 and 1000 fuel assemblies. A fuel assembly comprises a bundle of fuel rods. The fuel rods in turn comprise pellets of a nuclear fuel. A coolant in the form of water is arranged to flow from below and up through the core to cool the fuel rods while nuclear fission is in progress. The heated coolant is evaporated whereupon it is passed to a turbine for conversion into electric energy.

After a certain burnup time of the fuel assemblies, it is normal either to reject them or to reposition them within the fuel core in order to burn them out further. Such refuelling or repositioning of fuel takes place upon shutdown of the nuclear power plant. During the shutdown, work is normally carried out also in the reactor vessel and in other systems which are connected to the reactor vessel. Such a shutdown is very costly and takes approximately three to eight weeks. Therefore, it is desirable to do whatever is possible to reduce this shutdown time to the shortest possible time.

The refuelling in a nuclear power plant thus comprises (a) replacing burnt-up fuel assemblies with new ones, and (b) repositioning a large number of fuel assemblies in the core to obtain optimum burnup. During such refuelling, the fuel assemblies are normally handled one by one. When the reactor vessel is opened to make the fuel assemblies accessible, a handling tool is moved down into the core and is brought to grip a fuel assembly which is to be temporarily placed in a fuel pool. Normally, control rods arranged between the fuel assemblies are left in the reactor vessel. Further fuel assemblies are lifted out of the core and placed at an arbitrary location in the pool. Thereafter, new fuel assemblies are lifted from the pool into the reactor vessel to the new empty positions. The fuel assemblies are thus lifted one by one. The fuel assemblies which are to be repositioned within the core are normally moved direct from their old to their new positions.

In the event that work has to be carried out in the reactor vessel or in adjacently located systems, such as pumps directly connected to the reactor vessel, a suitable number of fuel assemblies have to be lifted out therefrom and be temporarily placed at an arbitrary location in the fuel pool. In certain cases, the whole reactor vessel may have to be emptied of fuel assemblies.

The lifting of the fuel assemblies one by one out of and into the reactor vessel, respectively, is one of the independent work operations during the shutdown which takes a relatively large proportion of the total shutdown time. The purpose of the present invention is to provide a method of reducing the time of the fuel handling and hence the total shutdown time.

### SUMMARY OF THE INVENTION, ADVANTAGES

The present invention relates to a method which considerably reduces the time of a shutdown where fuel assemblies are to be lifted out of or into a reactor vessel. The characteristic features for achieving this method are described in the characterizing part of claim 1.

According to one aspect of the method according to the invention, the whole of, or parts of, the reactor core is or are transported simultaneously from the reactor vessel to the fuel pool located adjacent thereto. The transport takes place in a forced manner by moving substantially groups containing a plurality of fuel assemblies simultaneously between the reactor vessel and the fuel pool. The groups may contain fuel assemblies with an arbitrary order or with a mutual order corresponding to the order of the fuel assemblies in the reactor vessel.

In the fuel pool a fuel rack of conventional type is arranged. The fuel rack is arranged in such a way that it allows the groups of fuel assemblies lifted from the reactor vessel to be arranged in the rack. The groups of the fuel assemblies may be arranged at an arbitrary location in the fuel pool. In one embodiment of the invention, the groups of fuel assemblies are arranged in the same mutual order as in the core in the reactor vessel. In one embodiment of the invention, all the fuel assemblies are lifted out of the reactor vessel simultaneously, whereby the core in its entirety is recreated in the fuel pool.

When the whole of, or parts of, for example a quadrant, of the core is or are lifted out of the reactor vessel, the reactor vessel or parts connected thereto may be serviced while at the same time making it possible to carry out refuelling or fuel repositioning in the fuel pool. When the servicing in the reactor vessel is completed and the fuel assemblies are replaced or repositioned, the groups of fuel assemblies, or the whole core, are moved at once to the reactor vessel again.

The advantage of the invention is that a considerable gain in time can be made by lifting a plurality of fuel assemblies simultaneously out of/into the reactor vessel. An additional gain in time can be made by carrying out the refuelling work in the fuel pool in parallel with the servicing in the reactor vessel or parts connected to the reactor vessel. The total time for handling of fuel assemblies and/or control rods can thus be considerably reduced. This saving of time results in a considerable saving of cost.

### BRIEF DESCRIPTION OF THE DRAWINGS

The invention will be most readily understood with reference

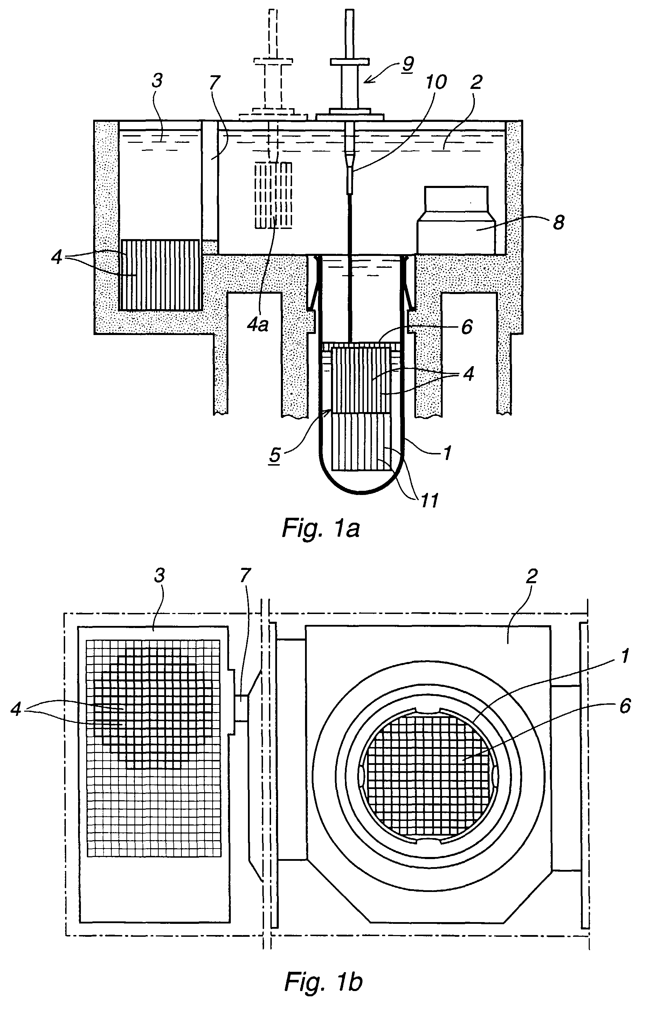

to the accompanying drawings. Figure 1a schematically shows, in a view from the side, a reactor vessel in a reactor pool and an adjacently located fuel pool. Figure 1b shows Figure 1a in a view from above.

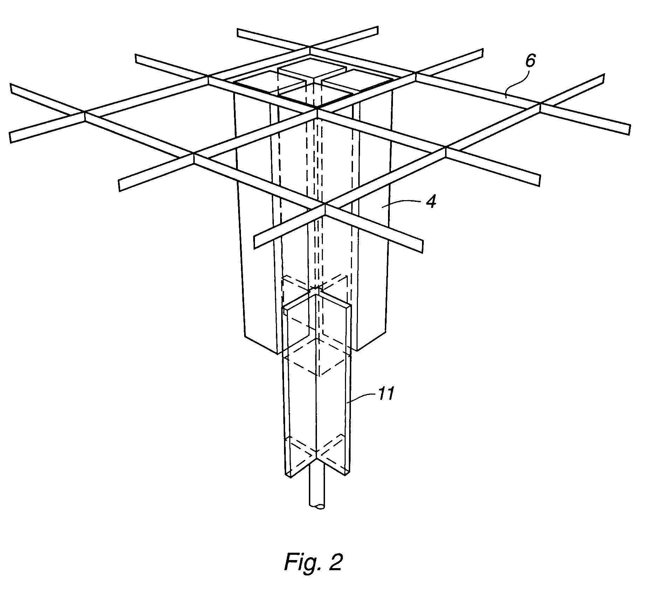

Figure 2 shows a core module with four fuel assemblies and a control rod arranged therebetween.

### DESCRIPTION OF THE PREFERRED EMBODIMENTS

Figure 1a shows part of a nuclear power plant comprising a reactor vessel 1 with a removed reactor vessel cover, not shown in the figure, arranged in a water-filled reactor pool 2. Further, a so-called fuel pool 3 is shown arranged adjacent to the reactor pool 2. The fuel pool 3 is substantially designed for temporary storage of new and completely or partially burnt-up fuel assemblies 4, respectively. The reactor vessel 1 comprises a core 5 with a plurality of fuel assemblies 4 and a core grid 6 arranged above the core 5. The reactor pool 2 is connected to the fuel pool 3 via a closable opening 7. The other internal parts 8 of the reactor can be temporarily arranged in the reactor pool 2.

During shutdown of the nuclear reactor, the reactor vessel 1 is filled with water and the reactor vessel cover removed. Then, the reactor pool 2 above the reactor vessel 1 is filled with water and the port 7 between the reactor pool 2 and the fuel pool 3 is opened. Internal reactor parts 8 arranged above the core 5 are lifted out and arranged in the reactor pool 2. The core grid 6 and the fuel assemblies 4 arranged below the grid are now available for a gripper 9 arranged in the reactor hall. The gripper comprises, for example, a telescopic arm 10 for lowering into the reactor vessel 1 and raising a group 4a of fuel assemblies 4 therefrom to be further transported to the fuel pool 3. Figure 1a shows the gripper 9 in dashed lines during transport of a group 4a of fuel assemblies 4. The fuel assemblies 4 are lifted out through the openings in the core grid 6. The appearance of the core grid 6 is shown, in principle, also in Figure 2.

Figure 1b indicates in the fuel pool 3 positions therein in which the raised groups 4a of fuel assemblies 4 and control rods 11, if any, are intended to be arranged. In the fuel pool 3 there is arranged, in these positions, a fuel rack (not shown) with an upper supporting structure (not shown) with openings suitable for receiving groups 4a of fuel assemblies 4 which are lifted out of the reactor vessel 1.

The groups 4a of fuel assemblies 4 and control rods 11, if any, which are to be lifted out of the reactor vessel may be assembled in a plurality of different ways. One way is that the groups 4a comprise a plurality of fuel assemblies 4 which are chosen from arbitrary positions in the reactor core 5. Another way is that the groups 4a comprise fuel assemblies 4 which, within the group 4a, are arranged with the same mutual order as that in which they are arranged in the reactor vessel 1. Still another way is that the groups 4a comprise one or more core modules. A core module comprising a cruciform control 11 surrounded by four fuel assemblies 4 is clear from Figure 2.

The groups 4a lifted out of the reactor vessel 1 may either be placed at arbitrary locations in the fuel pool 3 or be placed with the same mutual order as that in which they are arranged in the reactor vessel 1 such that the reactor core 5 is recreated in the fuel pool 3.

Figure 2 shows a core module comprising four fuel assemblies 4. Between the four fuel assemblies 4, a cruciform control rod 11 is arranged. The control rod 11 has a neutron-absorbing effect and the task thereof is to control the power of the reactor by being inserted into and extracted from the core 5. The control rod 11 may either be lifted out together with the fuel assemblies 4 or be left in the reactor core 5. The control rods 11 may also be lifted out of/into the reactor vessel in an operation separate from the lifting of the fuel assemblies 4. The control rods are then placed temporarily in the fuel pool 3, as are the fuel assemblies 4.

Figure 2 also shows schematically a fragment of a core grid 6. The core grid 6 comprises a grid. The size of an opening in the grid corresponds to the size of four adjacently positioned fuel assemblies, that is a core module. The supporting structure at the upper limiting surface of the fuel rack is preferably given a design corresponding to that of the core grid 6, whereby the handling by means of the gripper 9 used is facilitated since the gripper may be supported and controlled with the aid of the supporting structure and the core grid 6, respectively, in the same way both in the core 5 and in the fuel pool 3.

## Claims

1. A method for fuel handling comprising lifting of fuel assemblies (4) and/or control rods out of/into a reactor vessel (1) in a nuclear reactor, wherein the reactor vessel comprises a reactor core (5) with a plurality of fuel assemblies (4) and control rods (11) and wherein a fuel pool (3) is arranged adjacent the reactor vessel (1), **characterized** in that the whole of, or parts of, the reactor core (5), comprising at least two fuel assemblies (4), is or are simultaneously lifted, respectively, out of and into the reactor vessel (1), and that the removed fuel assemblies (4) or control rods (11) or the fuel assemblies (4) and the control rods (11) are temporarily arranged in the fuel pool (3).

2. A method according to claim 1, **characterized** in that parts of the reactor core (5) are respectively lifted out of and into the reactor vessel (1) in groups (4a) comprising a plurality of fuel assemblies (4) and that the groups (4a) consist of arbitrarily chosen fuel assemblies.

3. A method according to claim 1, **characterized** in that parts of the reactor core (5) are respectively lifted out of and into the reactor vessel (1) in groups (4a) comprising a plurality of fuel assemblies (4) and that the groups (4a) are composed in such a way that the fuel assemblies (4) within the group are placed with the same mutual order as that in which they are arranged in the reactor vessel (1).

4. A method according to any of the preceding claims, **characterized** in that parts of the reactor core (5) are respectively lifted out of and into the reactor vessel (1) in groups (4a) comprising one or more core modules, each in their turn comprising a control rod (11) and four fuel assemblies (4) arranged around the control rod.

5. A method according to claim 3 or 4, **characterized** in that the groups (4a) are placed in the fuel pool (3) in such a way that the groups (4a) are placed with the same mutual order as that in which they are arranged in the reactor vessel (1).

6. A method according to any of the preceding claims, **characterized** in that refuelling and repositioning of fuel assemblies (4) are carried out in the fuel pool (3) while all of, or parts of, the core (5) is or are placed therein.
